# EUROPEAN PATENT APPLICATION

(11) **EP 4 538 250 A1**
(43) Date of publication of application: **16.04.2025**
(21) Application number: 23203457.9
(22) Date of filing: 13.10.2023
(51) Int. Cl.: C04B 35/56, C04B 35/58, C04B 35/622, C04B 35/626, C04B 35/634, C04B 35/636, C04B 41/00, F16D 65/00, F16D 69/02, C22C 26/00

(54) **POWDER MIXTURE**

(71) Applicant: Treibacher Industrie AG, 9330 Treibach-Althofen (AT)
(72) Inventor: Demoly, Alban, 9020 Klagenfurt (AT)
(74) Representative: Schwarz & Partner Patentanwälte GmbH

(57) **Abstract**

The present invention relates to a powder suitable for producing wear and corrosion resistant layers comprising a mixture of
a first component selected from the group consisting of carbides, carbonitrides, borides, nitrides of Ti and mixtures thereof and
a second component selected from the group consisting of carbides, carbonitrides, borides, nitrides of Mo, W, V, Nb and mixtures thereof, and
an organic binder,
wherein the total amount of the first component and the second component is at least 60 wt.%, preferably 70 wt.% to 99 wt.%,
wherein the weight ratio of the first component to the second component is from 70:30 to 98:2, and
wherein a content of metallic binders in the powder is at most 15 wt.%, preferably at most 5 wt.%.

## Description

The present invention relates to a powder mixture for producing a wear and corrosion resistant layer, especially coating.

### Background of the Invention

In the tribological system of the brake, the surface of the brake pad contacts the surface of the brake disc under the application of a mechanical braking force. The interaction between the friction materials causes abrasive wear and, under the influence of atmospheric humidity and/or corrosive media from the immediate environment, corrosive attack of the brake disc surface, causing particulate matter emissions.

According to the latest EURO 7, new emission standards rules are envisaged bringing emission limits for motor vehicles that require a significant reduction in fine particulate matter emissions starting from July 2025.

Hence, wear resistant friction materials are of particular interest to reduce brake emissions.

To increase wear resistance in the tribological system of the brake, brake discs mainly consist of grey cast iron on which one or more coating layers are applied.

Conventional coatings can contain Ni from stainless steel components, which also contributes to sensitization (Ni allergies) in humans.

It is known in the art that wear resistance can be improved by adding carbides such as Cr₃C₂, WC or TiC as a component in the top layer of the coating, embedded in a stainless steel matrix (FeCr matrix). The widespread use of carbide composites as wear resistant materials is attributed to their unique combination of desired properties, such as high wear resistance and stiffness, respectable strength, and relatively low production costs.

For example, WO 2020/234146 A1 discloses a friction brake element for a motor vehicle comprising an antiwear layer of various carbides including chromium carbide, niobium carbide, titanium carbide, tungsten carbide, molybdenum carbide, and vanadium carbide.

Another example is disclosed in US 2013/136941 A1, describing a multifunctional coating for metallic substrates comprising two layers, wherein one layer comprises particles disposed in a metal or alloy matrix. Particles suitable for this can comprise metal carbides, metal nitrides, metal borides, metal silicides, ceramics, cemented carbides or cast carbides.

WO 2021/224308 A1 describes a vehicle brake component, having a metallic base body surface provided with a coating comprising hard materials such as tungsten carbides, chromium carbides, titanium carbides, vanadium carbides, or silicon carbides.

To produce a top coating on a metal substrate, an alloy feedstock including carbide-forming metals such as Ti, V, Cr can also be used. The feedstock is melted during the process and carbide-forming metals precipitate as finely distributed carbides during cooling either with added carbon or with the carbon from the steel alloy.

For instance, the coating can be applied by laser cladding. During laser cladding, a powder or wire feedstock material is melted and consolidated by use of a laser in order to coat a substrate. This method is often used to improve mechanical properties or increase corrosion resistance of a material.

EP 4 029 966 A1 discloses a method for producing a brake gray cast iron brake disc, wherein a coating including carbides is applied on the brake surface by laser cladding.

DE 10 2020 203 412 A1 describes a process for the production a protective top layer on a brake disc by laser cladding of a NbC metal matrix powder or a Cr₃C₂ metal matrix powder.

Furthermore, WO 2021/007209 A1 discloses an iron-based feedstock for various deposition processes, such as ultra-high speed laser cladding to form a coating with certain microstructural features and performance characteristics.

It also turned out, that high carbide content can also decrease the risk of metal pick-up (MPU). MPU is a problematic phenomenon in automotive disc brakes. MPU generally forms metal lumps on the surface of the brake pad. If brake pads have MPU, during breaking, they would cause grooving of the disc rotor, generating braking noise and deteriorating the brake performance. MPU is a phenomenon dependent on many factors, such as climate, general road conditions etc. and, thus, not easily quantifiable.

However, it turned out that that high carbide content does not only improve wear resistance of top layers of brake discs but is also associated with various problems.

A problem is that when adding higher amounts of carbides, the possibility of cladding the materials decreases as the material becomes very prone to cracks with increased amounts of carbides.

Cracks through the coating are fatal for the corrosion resistance if the cracks connect the surface with the substrate. Corrosive media can reach the substrate and corrode the bonding zone, causing rust to penetrate to the surface. This will visually and functionally destroy the coating.

Efforts were already made in the past to produce wear and corrosion resistant top coatings.

For instance, WO 2022/223835 A1 discloses a mixture of a stainless steel powder and chromium carbide and at least one other carbide having a melting point higher than chromium carbide. The obtained coating contains at least 30% by volume of two dispersed carbides. WO 2022/223835 A1 mentions that the obtained top coatings are substantially free from cracks, however, the experimental data clearly shows cracks in the coating after laser cladding.

Also, commercially available carbide-based powders with FeCr matrices are advertised as environmentally friendly alternative to hardmetals with nickel or cobalt based matrices for the production of wear resistant top coatings. As example, the commercially available powder GTV 81.61.8S (GTV Verschleißschutz GmbH) contains TiC and FeCr in a ratio of 70 wt. % to 30 wt. %. Carbide powders such as TiC/FeCr or NbC are usually agglomerated and sintered or crushed and sintered for producing coatings. However, the crack-free top coatings made by the above-mentioned commercial powder do not contain more than 30 vol. % of carbides in stainless steel matrices.

Up to now, the highest amount of carbides in a laser cladded top coating for a brake disc that can be employed without any cracks is about 30 vol. % (based on total amount of coating).

In order to avoid cracking, different means and methods have been sought that are suitable to produce stress and crack-free protective coatings. Furthermore, especially Ni-free metal alloys with sufficient carbide content are needed to meet the requirements of future emission standards.

However, no suitable prematerials for the production of coatings with high carbide contents of at least 30 vol. % and low sensitivity of cracks have yet been found.

It has therefore been found that the above-addressed problems make it especially difficult to formulate powders to produce crack-free and wear resistant coatings.

Cermets (combinations of metals and Ti compounds such as TiC, TiN and the like) are alternative materials showing excellent hardness and wear resistance:
For example, Qiu et al. describe the effects of Mo₂C addition on the frictional properties of Ti(C,N)-based cermets. The cermets mentioned in this publication are used as dense bodies for cutting tools or molds, but not for coating layers. Cermets contain a significant amount of metallic binders. In this study, it has been shown that 6 wt. % Mo₂C improved the hardness. It is also reported that the excessive carbide reduced the toughness and increased the risk of cracking (Qiu et al., 2023, Materials, 16, 5645, doi: 10.3390/ma16165645).

It is also reported that the properties and the microstructure of cermets depend on the composition of the prematerials with respect to the carbon-nitrogen ratio, the stoichiometry of the hard phase and a significant amount of the metallic Ni/Co binder composition (Ettmayer et al., 1995, International Journal of Refractory Metals & Hard Materials, 13, 343-351, doi: 10.1016/0263-4368(95)00027-G).

Lengauer and Scagnetto provide an overview of the metallurgy of Ti(C,N)-based cermets with respect to microstructure formation during sintering. It is disclosed that an alloy of the iron metals Fe, Co, Ni are commonly used as metallic binders as well as multi-component binders such as Co, Ni, Fe, Cr, V, and Al (Lengauer and Scagnetto, 2018, Solid State Phenomena, 274, 53-100, doi: 10.4028/www.scientific.net/SSP.274.53).

The properties of TiC/Ni cermet systems comprising significant amounts of metallic binders is also described in further publications (Liu et al., 2005, Journal of Wuhan University of Technology-Mater. Sci. Ed, 20, 35-39, doi: 10.1007BF02835022 and Liu and Liu, 2010, Advanced Materials Research, 177, 378-381, doi: 10.4028/www.scientific.net/AMR.177.378).

Zhou et al. also report the effect of Mo and Mo₂C on microstructure and properties of Ti(C,N)-based cermets containing metallic binders. The results show that a Mo₂C content of less than 5 wt. % is advantageous to the microstructures and mechanical properties of the cermets, wherein the influence on the production of coatings for brake systems was not investigated (Zhou, 2009, International Journal of Refractory Metals & Hard Materials, 27, 26-32, doi: 10.1016/j.ijnnhm.2008.01.011).

All described state of the art cermet powders either need the addition of significant amounts of metallic binders and/or need to be sintered to produce wear and corrosion resistant coatings. However, the presence of metallic binders further contributes to the emission of particulate matter during braking.

Zhang et al describe the effects of Molybdenum on the microstructure of Fe-based composite laser cladding coatings. It is noted that cracks were found in the coating once the addition of FeMo₇₀ exceeded 9 wt. %.

### Short Description of the Invention

It is the object of the present invention to overcome the drawbacks of the state of the art powders and methods to produce crack-free, wear and corrosion resistant coatings.

The object of the present invention is solved by a ceramic powder suitable for producing wear and corrosion resistant layers comprising a mixture of
a first component selected from the group consisting of carbides, carbonitrides, borides, nitrides of Ti and mixtures thereof, and
a second component selected from the group consisting of carbides, carbonitrides, borides, nitrides of Mo, W, V, Nb and mixtures thereof, and
an organic binder,
wherein the total amount of the first component and the second component is at least 60 wt. %, preferably 70 wt. % to 99 wt. %,
wherein the weight ratio of the first component to the second component is from 70:30 to 98:2, and
wherein a content of metallic binders in the powder is at most 15 wt. % preferably at most 5 wt. %.

The ceramic powder of the present invention is particularly useful as a component in a mixture for producing a wear and corrosion resistant layer, especially a coating, together with a stainless steel powder.

Another aspect of the present invention relates to a wear and corrosion resistant layer, obtained by treating a surface with a mixture as defined herein.

A further aspect relates to a brake disc comprising the layer as defined herein as a top coating.

Yet, another aspect of the present invention relates to a process to produce a ceramic powder as defined herein.

### Short Description of the Figures

Fig. 1 shows a cross section of a crack-free top coating comprising TiC and Mo₂C mixed with a 316L stainless steel metal matrix after laser cladding. The carbide content of the coating is at least 40 vol. %.
Fig. 2 shows a cross section of a crack-free top coating comprising TiCN and Mo₂C mixed with a 316L stainless steel metal matrix after laser cladding. The carbide content of the coating is at least 55 vol. %.
Fig. 3 shows a cross section of a crack-free top coating comprising TiCN and Mo₂C mixed with a 430L stainless steel metal matrix after laser cladding. The carbide content of the coating is at least 30 vol. %.
Fig. 4 shows a cross section of a cracked top coating comprising a mixture of TiC and a 316L stainless steel metal matrix after laser cladding. The carbide content of the coating is about 30 vol. %.

### Detailed Description of the Invention

It surprisingly turned out that the ceramic powder according to the invention is suitable to produce a stress and crack-free protective layer with high content of carbides or similar hard components and without crack formation.

Preferably, the first and the second component of the ceramic powder are carbides and/or carbonitrides.

In the following, however, the term "carbides" is also used representative for other possible non-metallic parts of the components used, i.e.carbides-, borides-, nitrides etc.

The ceramic powder according to the invention contains metallic binders in an amount of at most 15 wt. %, preferably at most 5 wt.%. Most preferably the ceramic powder is essentially free of metallic binders, in contrast to state of the art cermet powders for coating application which contain significant amounts of metallic binders, such as nickel, cobalt, iron, copper, silver, chromium, zirconium, silicon, vanadium, and combinations thereof. It has been found that the use of an organic binder in the ceramic powder instead of metallic binders surprisingly leads to the required properties of the powder, while only limited amounts of metallic binders or even no metallic binders are necessary.

The obtained layer of the present invention shows highly desirable properties to improve the abrasive properties during braking and components lifetime.

The ceramic powder is characterized in that the weight ratio of the first component to the second component is preferably from 80:20 to 98:2, preferably from 85:15 to 95:5.

It has been found that the ceramic powder of the present invention, comprising preferably no metallic binders but organic binders, is very useful as a component for forming wear and corrosion layers with a high carbide content.

Preferably, the ceramic powder of the present invention is characterized in that it comprises carbides and/or carbonitrides of Ti as the first component and carbides of Mo as the second component. The carbide of Mo is preferably Mo₂C. Surprisingly, it turned out that titanium carbide and/or carbonitride (TiC and/or TiCN) hard phase agglomerates in combination with Mo₂C show exceptional good results in terms of producing wear and corrosion resistant coatings.

It has been found that Mo₂C seems to hinder the dissolution of the first component or carbide phase of the first component due to the additional carbides in the ceramic powder. Hence, a crack-free wear and abrasive resistant laser cladded layer with a carbide content of at least 30 vol. % and up to even 60 vol. % can be obtained with the ceramic powder comprising TiCN and/or TiC and Mo₂C. Furthermore, MPU can be reduced due to the high carbide content.

In a preferred embodiment of the present invention, the ceramic powder is characterized in that the organic binder is selected from the group consisting of polyvinylalcohols, cellulose-based binders, and mixtures thereof.

As will be set out further below, the ceramic powder of the present invention may be produced by a process including the step of spray-drying a mixture of first component, second component and the organic binder.

The organic binder can be soluble in water or in organic solvents. Preferably, the organic binder is a water soluble polymer that forms networks during spray-drying and thus binds the other components of the ceramic powders together. Alternatively, the organic binder can be at least one polymerizable monomer that can be polymerized during spray drying.

The amount of organic binder in the ceramic powder may range from 0.01 to 10 wt. %, such as 1 to 5 wt. %.

The ceramic powder of the present invention can be used as a component in a mixture for producing a wear and corrosion resistant layer, wherein said mixture contains a stainless steel powder, and wherein said ceramic powder is contained in said mixture in an amount of less than 50 wt. %.

In a preferred embodiment of the present invention, the amount of the ceramic powder of the invention in said mixture ranges from 10 to 30 wt. %, preferably from 10 to 25 wt. %. It appears that saturation is reached at a weight ratio of 25 wt. % or more, meaning that the carbide content (vol. %) in a layer formed from the powder mixture cannot be further increased by a higher weight ratio of the ceramic powder of the invention in the mixture with stainless steel powder.

The mixture contains at least 95% by weight, most preferably at least 99% by weight of the ceramic powder and the stainless steel powder.

In a further preferred embodiment, the mixture essentially consists of said ceramic powder and the stainless steel powder.

The stainless steel powder can be selected from the group consisting of FeCrMn steel, duplex stainless steel, 430 stainless steel, and 316 stainless steel according to AISI/SAE stainless steel designation.

Preferably, the layer formed is a coating.

According to another preferred embodiment of the present invention the layer is a top coating for a brake disc.

The mixture of the ceramic powder and the stainless steel powder may be applied to a surface by cladding.

The term "cladding", as used herein, refers to the process of covering or layer surfaces of a structure to protect to improve e.g., resistance. Cladding can include thermal spray cladding or laser cladding. Thermal spray cladding encompasses a variety of processes, such as cold spray cladding, using a gas or electricity to create a flame in order to melt a wire or powder materials and apply them to a substrate. In cold spray cladding, solid powders are accelerated in a supersonic gas jet to velocities up to. 1200 m/s. During contact with the substrate, particles undergo plastic deformation and adhere to the surface.

Preferably, the treatment is laser cladding. "Laser cladding" means a manufacturing process that deposits a metallic material onto a surface using a laser beam as the heat source. The substance is melted, fused to the surface, and then typically becomes harder and more resistant to wear than the base material.

In the case of laser cladding the mixture of the ceramic powder and the stainless steel powder may be prepared *in situ* by feeding both powders separately into the laser beam, whereupon the mixture is formed and melted.

Preferably, the layer is treated by high-speed laser cladding. High-speed laser cladding, also referred to as extreme high-speed laser cladding (EHLA) or ultra-high-speed laser cladding (UHSLC), means a laser surface treatment technology with cladding speeds greater than 20 m/min and up to 400 m/min, depending on properties of the powder and substrate. High-speed laser cladding can be used as an economically viable alternative to thermal spray technologies for corrosion and wear protection.

Typical ranges of process parameters of high-speed laser cladding can be as follows:
Laser power: 6 - 22 kW
Powder mixture feed rate: 100 - 250 g/min
Cladding speed: 40 - 400 m/min
Shielding gas flow: 20 - 50 l/min
Carbide feed: 10 - 30 wt. %
Carrier gas flow: 1-6 l/min
Powder nozzle diameter: 1.5 - 2.5 mm
Working distance: 25 mm
Angle between nozzle and surface: 0° - 25°

Another aspect of the present invention relates to a wear and corrosion resistant layer that is obtainable by treating a surface with the mixture of the ceramic powder of the invention and a stainless steel powder as described above.

The layer according to the present invention may particularly be obtained by treating said surface by laser cladding.

Preferably, the laser cladded layer has a carbide content of at least 30 vol. %, preferably from 40 to 60 vol. %.

If, on the other hand, the surface is treated by thermal spray cladding, the maximum carbide content in the formed layer can be about 80 vol %.

It was found that a crack-free layer can be obtained with a carbide content of at least 30 vol. % of the layer and even more. The obtained layer according to the invention shows high fracture toughness and thermal conductivity and is able to dissipate the forces and temperatures acting on it without cracking.

The carbide content can be measured via optical measurement and digital analysis, as further set out below.

According to another preferred embodiment of the present invention the layer is a top coating.

The obtained top coating is substantially free of cracks.

In a particular embodiment, said top coating is a top coating of a brake disc.

The ceramic powder of the present invention can be produced by mixing the first component and the second component and at least one organic binder, spray drying said mixture, and optionally sintering said spray dried mixture.

Spray drying is important to form the agglomerates by sticking together the components. In contrast to e.g., cermets, sintering of the mixture of the two components and the organic binder is not necessary. Optionally, the spray dried mixture can also be sintered.

Preferably, the spray dried ceramic powder is flowable and has a particle size distribution in the lower µm range to be further used for cladding, preferably for laser cladding.

The spray dried ceramic powder may have a particle size distribution with a d₁₀ of less than µm 30 µm, preferably between 10 and 25 µm.

The spray dried ceramic powder may have a particle size distribution with a d₅₀ of less than 60 µm, preferably between 20 and 50 µm.

The term "particle size" as used herein refers to the d₁₀ value as determined from the particle size distribution. The d₅₀ value is known as median diameter or medium value of the particle size distribution, being determined from a volume based representation or from a number based representation. In the present application, all dx values refer to the volume based representation, i.e. the particle diameter at "x" vol. % in the cumulative distribution (e.g. a d₁₀ of 100 µm means that 10 vol. % of the particles have a smaller diameter than 100 µm).

In the present invention, the particle size distribution (PSD) was determined using laser diffraction particle analysis, preferably using a "Microtrac" particle analyzer. The particle size of the samples described herein were measured with a Microtrac S3550 particle analyser in the dry mode.

The particle size measurements were performed with a powder sample volume in the range from 3 to 6 mL (0.125-0.25 US tea spoon). This sample was placed on the storage plate of the "Turbotrac" disperser. The process was automatically controlled by the auto sequence of the Microtrac S3550. The equipment settings used were "high shear" on level 9 to 10, flushing air pressure 0.01 MPa and particle size analysis mode was absorption. The PSD measurement range of the Microtrac S3550 in dry mode is 0.24 µm to 1408 µm.

The PSD of the ceramic powder is preferably measured after spray drying.

The flowability of the spray dried ceramic powder might be between 40s /50g and 70s/50g, preferably between 50s /50g and 60s/50 g.

The "flowability" refers the time taken by 50 gram of the powder to flow through a hall flowmeter funnel. The flowability can be measured as mentioned below.

The ceramic powder as defined herein can be produced by mixing the organic binder in total weight ratio of 0.01 to 10 wt. %.

The organic binder may be selected from the group consisting of polyvinylalcohols, cellulose-based binders, and mixtures thereof.

### Examples

### Example 1: TiC + Mo₂C

Titanium carbide powder (Treibacher Industrie AG, Austria) was provided. The powder was obtained by carbothermal synthesis and having a particle size between 1.1 to 2.0 µm, a total carbon content of 19.0 to 20.0 wt. %, an impurity content (wt. %) lower than 0.01, 0.6, 0.2, 0.5, 1, 0.03 for respectively sulfur, oxygen, nitrogen, free carbon, tungsten and other metallic impurities. Titanium content was as balance.

Molybdenum carbide (Mo₂C) powder (Treibacher Industrie AG, Austria) was provided. The powder was obtained by carbothermal synthesis having a grain size between 1.0 to 2.0 µm, a carbon content of 5.7 to 6.0 wt. %, an impurity content (wt. %) lower than 0.05, 0.5, 0.3, 0.01 for respectively sulfur, oxygen, free carbon, and other metallic impurities. Molybdenum content was as balance.

The grain size was measured using a Fisher Sub-Sieve-Sizer (FSSS). The total and free carbon as well as sulfur contents were measured using carrier gas hot extraction (LECO company, C/S-Analysator CS-744_2). The oxygen was measured using carrier gas hot extraction (LECO Company, O/N-Analysator TC 500 C). The impurity content was measured using ICP OES (ICPOED 5 110DV Agilent) after complete acid dissolution.

In a first step, a 2 wt. % organic polyvinylalcohol binder (Optapix PAF 46; Zschimmer und Schwarz GmbH & Co K, Germany) and 0.03 wt. % of a wetting agent (Glydol N109; from Zschimmer und Schwarz GmbH & Co KG, Germany) with respect to the total carbide content were homogenized with deionized water.

The raw materials were added to the mixture in order to obtain a solid content of 65 to 67% wt. % in the slurry and a carbide share of 95 wt. % and 5 wt. % for titanium carbide and molybdenum carbide respectively. After completing the carbide addition, the slurry was further homogenized between 25 and 35 minutes. The stirring step was carried out with a variable rotating speed between 400 to 800 rpm to avoid foam formation.

After homogenization, the slurry was spray dried in a Vettertec-Spray-Dryer. Following spraying parameters were set: Air temperature of 280°C and 115°C for inlet and outlet respectively, atomizer wheel rotating speed of 14.000 rpm, 27% Fan speed. The spray dried ceramic powder showed an average grain size d₅₀ of 50 µm and good flowability with 50s /50g. Analysis was performed by PSD measurement (Microtrac S3550 dry measurement) and SEM, Hall-Flow measurement.

### Example 2: TiCN + Mo₂C

Titanium carbonitride powder (Treibacher Industrie AG, Austria) was provided. The powder was obtained by carbothermal synthesis and having a particle size from (0.9 - 2.1 µm), a total carbon content (9.9-11.1 wt. %), a total nitrogen content (10.3-11.5 wt. %), an impurity content (wt. %) lower than 0.01, 0.6, 0.7, 0.45, 0.03 for respectively sulfur, oxygen, free carbon, iron and other metallic impurities Titanium content was as balance.

Molybdenum carbide (Mo₂C) powder (Treibacher Industrie AG, Austria) was provided. The powder was obtained by carbothermal synthesis having a grain size between 1.0 to 2.0 µm, a carbon content of 5.7 to 6.0 wt. %, an impurity content (wt. %) lower than 0.05, 0.5, 0.3, 0.01 for respectively sulfur, oxygen, free carbon, and other metallic impurities. Molybdenum content was as balance.

The ceramic powder was obtained with the same method as described in Example 1. The spray dried ceramic powder showed an average grain size d₅₀ of 39 µm and good flowability with 51 to 54s /50g. Analysis was performed by PSD measurement (Microtrac S3550 dry measurement) and SEM, Hall-Flow measurement.

### Comparative Example 1: TiC

Titanium carbide powder (Treibacher Industrie AG, Austria) was provided. The powder was obtained by carbothermal synthesis and having a particle size from (1.1 to 2.0 µm), a total carbon content (19.0 to 20.0 wt. %), an impurity content (wt. %) lower than 0.01, 0.6, 0.2, 0.5, 1, 0.03 for respectively sulfur, oxygen, nitrogen, free carbon, tungsten and other metallic impurities. Titanium content was as balance.

The ceramic powder was obtained with the same method as described in Example 1, wherein the carbide share was 100 wt. % for titanium carbide.

The spray dried powder showed an average grain size d₅₀ of 40 µm and good flowability with 64s /50g. Analysis was performed by PSD measurement (Microtrac S3550 dry measurement) and SEM, Hall-Flow measurement.

### Comparative Example 2: TiC/FeCr

A commercially available powder containing a mixture of TiC and FeCr 70/30 (GTV Verschleißschutz GmbH, 81.61.8S) with no further ingredients was used. The spray dried powder showed an average grain size d₅₀ of 42.19 µm and good flowability with 53s /50g. Analysis was performed by PSD measurement (Microtrac S3550 dry measurement) and SEM, Hall-Flow measurement.

### Production of top coatings

The tests were performed on grey cast iron substrates. Top coatings were cladded with the aid of a diode laser, Laserline LDF 7000- 40. The powders of the Examples and Comparative Examples as well as the stainless steel powders were separately injected from a gravimetric powder feeding system and mixed in a powder focus above the laser focus of the laser.

Following powder mixtures were injected:

**Table 1: Powder mixture formulations**

| Powder mixture | Ceramic powder | Stainless steel powder | Weight ratio ceramic powder: stainless steel powder in feed |
|---|---|---|---|
| 1 | Example 1 | 316L | 22:78 |
| 2 | Example 2 | 316L | 22:78 |
| 3 | Example 2 | 430L | 22:78 |
| 4 | Comparative Example 1 | 316L | 22:78 |
| 5 | Comparative Example 2 | 316L | 22:78 |

Laser cladding was carried out under following parameters:
Laser power: 22 kW
Powder mixture feed rate: 210 g/min
Cladding speed: 150 m/min
Shielding gas flow: 20 - 50 l/min (100 % Argon)
Carrier gas flow: 3 l/min
Powder nozzle diameter: 1.75 mm
Working distance: 25 mm
Angle between nozzle and surface: 0°

### Characterization of the top coatings

The total carbide content of the top coating was determined by using a Keyence Digital Microscope VHX-7000.

Three top coatings of each cladded powder mixture were provided for analysis. Bright-field images were taken at a 500X magnification of each sample. The automatic area measurement (grain size) module of the image analysis system of Keyence Digital Microscope VHX-7000 was used for total carbide content determination. The color threshold of the images was adjusted accordingly. No separation manipulations were done prior to measurements. Carbides appear as dark areas. Area percentage of carbides was determined and automated statistics were generated.

### Results

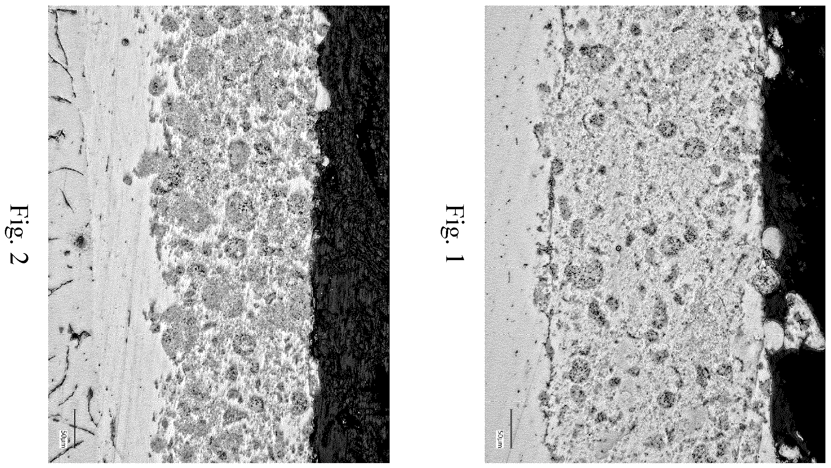

The top coatings obtained by laser cladding Mixture 1 according to the invention onto grey cast iron substrates surprisingly show a carbide content of at least 40 vol. % and no crack formation after cladding, as depicted in Fig. 1.

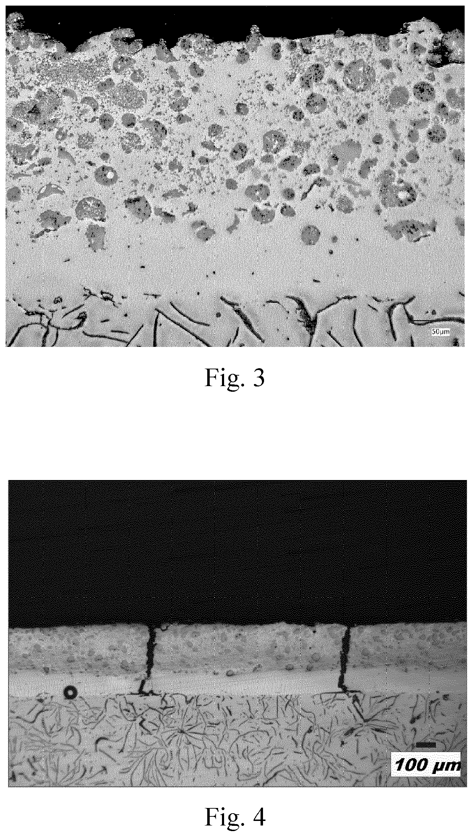

Also, the cladded Mixtures 2 and 3 according to the present invention led to crack-free top coatings with carbide contents of at least 55 vol. % and at least 30 vol. %, as shown in Figs. 2 and 3, respectively.

Fig 4 shows a top coating made by cladding TiC powder (Mixture 4) onto a grey cast iron substrate. Mixture 4 was deposited on the substrate under the same conditions as cladding Mixtures 1 to 3. A carbide content of about 30 vol. %. could be determined, wherein the coating cracked after cladding.

The top coating obtained by laser cladding Mixture 5 exhibited no visible crack but had a significantly lower carbide content than 30 vol. %.

The results clearly show the exceptional properties of top coatings obtained by laser cladding the Mixtures 1, 2 and 3 according to the invention regarding carbide content and crack formation after cladding. In particular, the cladded top coatings using Mixtures 1, 2, and 3 showed a carbide content of at least 30 vol. % and significantly more (based on total amount of coating) and are free of any cracks, meaning that the number of cracks in the top coating is zero. In contrast, the top coatings based on Mixtures 4 and 5 either show crack formation or lower carbide content.

## Claims

1. A ceramic powder suitable for producing wear and corrosion resistant layers comprising
a first component selected from the group consisting of carbides, carbonitrides, borides, nitrides of Ti and mixtures thereof and
a second component selected from the group consisting of carbides, carbonitrides, borides, nitrides of Mo, W, V, Nb and mixtures thereof, and
an organic binder,
wherein the total amount of the first component and the second component is at least 60 wt. %, preferably 70 wt. % to 99 wt. %
wherein the weight ratio of the first component to the second component is from 70:30 to 98:2 and
wherein a content of metallic binders in the powder is at most 15 wt. %, preferably at most 5 wt. %.

2. Ceramic powder according to claim 1, **characterized in that** the weight ratio of the first component to the second component is from 80:20 to 98:2, preferably from 85:15 to 95:5.

3. Ceramic powder according to claim 1 or 2, **characterized in that** the powder is essentially free of metallic binders.

4. Ceramic powder according to any of the preceding claims, **characterized in that** the powder comprises carbides and/or carbonitrides of Ti as the first component and carbides of Mo as the second component.

5. Ceramic powder according to any of the preceding claims, **characterized in that** the organic binder is selected from the group consisting of polyvinylalcohols, cellulose-based binders, and mixtures thereof.

6. Use of the ceramic powder according to any of the preceding claims in a mixture for producing a wear and corrosion resistant layer, wherein said mixture contains a stainless steel powder, and wherein said ceramic powder is contained in said mixture in an amount of less than 50 wt. %.

7. Use according to claim 6, **characterized in that** the amount of the ceramic powder in said mixture ranges from 10 to 30 wt. %, preferably from 10 to 25 wt. %.

8. Use according to claim 6 or 7, **characterized in that** the mixture essentially consists of said ceramic powder and the stainless steel powder.

9. Use according to any of claims 6 to 8, **characterized in that** the stainless steel powder is selected from the group consisting of FeCrMn steel, duplex stainless steel, 430 stainless steel, and 316 stainless steel according to AISI/SAE stainless steel designation.

10. Use according to any of claims 6 to 9, **characterized in that** the layer is a coating.

11. Use according to claim 10, **characterized in that** the layer is a top coating for a brake disc.

12. Use according to any of claims 6 to 11, **characterized in that** the mixture is applied to a surface by cladding.

13. Use according to claim 12, **characterized in that** the cladding is laser cladding.

14. A wear and corrosion resistant layer, obtainable by treating a surface with a mixture as defined in any of claims 6 to 13.

15. Layer according to claim 14, **characterized in that** the treatment is laser cladding.

16. Layer according to claim 15, wherein said layer has a content of the first component and the second component of at least 30 vol. %, preferably from 40 to 60 vol. %.

17. Layer according to any of claims 14 to 16, wherein said layer is a top coating.

18. Layer according to claim 17, wherein said top coating is a top coating of a brake disc.

19. A brake disc comprising the layer according to any of claims 14 to 18 as a top coating.

20. Process to produce the ceramic powder according to claims 1 to 5 comprising the steps
a) mixing the first component and the second component according to claims 1 to 5 and at least one organic binder,
b) spray drying said mixture, and
c) optionally sintering said spray dried mixture.

21. Process according to claim 20, **characterized in that** the organic binder is mixed in in a total weight ratio of 0.01 to 10 wt. %.

22. Process according to claim 20 or 21, **characterized in that** the organic binder is selected from the group consisting of polyvinylalcohols, cellulose-based binders, and mixtures thereof.
